# FASCICULE DE BREVET EUROPEEN

(11) **EP 1 983 231 B1**
(45) Date de publication et mention de la délivrance du brevet: **13.01.2010**
(21) Numéro de dépôt: 08305098.9
(22) Date de dépôt: 10.04.2008
(51) Int. Cl.: F16H 63/34, F16H 63/38, F16H 63/36

(54) **Dispositif de commande interne de boîtes de vitesses**
Interne Steuervorrichtung für Getriebe
Internal control device for a gearbox

(30) Priorité: 19.04.2007 FR 0754566
(43) Date de publication de la demande: 22.10.2008
(73) Titulaire: PEUGEOT CITROËN AUTOMOBILES S.A., 78140 Vélizy Villacoublay (FR)
(72) Inventeur: Aleksander, Boris, 91400 Orsay (FR); Matias, Carlos, 95100 Argenteuil (FR)

(56) Documents cités:
- EP-A- 0 412 279
- EP-A- 1 262 691
- DE-A1- 10 109 642
- DE-A1- 10 160 859
- FR-A- 2 805 020

## Description

La présente invention est relative aux boîtes de vitesses mécaniques de véhicules, notamment de véhicules automobiles, et plus particulièrement à un dispositif de commande interne d'une telle boîte.

Un dispositif de commande comportant toutes les caractéristiques du préambule de la revendication indépendante 1 est connu de EP-A-1 262 691.

Dans une boîte de vitesses conventionnelle, à l'intérieur d'un carter, est disposée une tige de sélection mobile en rotation autour d'un axe longitudinal. Un organe menant, tel qu'un doigt de passage de vitesses, porté transversalement par la tige de sélection et mobile par rapport à celle-ci en translation le long de l'axe longitudinal, est destiné à commander un ensemble d'organes menés. De manière connue, les organes menés prennent en général la forme de crosses, ou noix de passage, dans lesquelles sont ménagées des encoches aptes à recevoir le doigt de passage pour commander respectivement les fourchettes correspondantes de la boîte de vitesses.

Chaque fourchette est disposée sur un axe propre et peut prendre trois positions, une position de repos et deux positions de passage (ou d'engagement) de rapport, symétriques par rapport à la position de repos. Les fourchettes vont de l'une à l'autre de ces positions par un mouvement de translation selon l'axe longitudinal provoqué par le doigt de passage. Lorsqu'un conducteur actionne le levier de passage de vitesses, la tige de sélection et le doigt de passage sont entraînés en rotation autour de l'axe longitudinal pour sélectionner la vitesse désirée, puis le doigt de passage seul est entraîné en translation le long de cet axe pour effectuer le passage de la vitesse souhaitée.

Afin de sécuriser le fonctionnement des boîtes de vitesses, des moyens de verrouillage sont prévus, afin qu'un rapport ne puisse pas être désengagé de manière accidentelle, sans une action volontaire du conducteur. De manière connue, ces moyens consistent en des billages qui forment des dispositifs d'indexation, permettant de réaliser le positionnement précis et le maintien en position des pièces mobiles lorsque la boîte est dans une position de point mort ou de rapport de vitesse engagé.

Il est connu de prévoir un billage propre à chaque fourchette permettant d'en indexer le positionnement en translation le long de l'axe longitudinal. Ces billages, dits aval, permettent donc d'indexer les positions de passage de la boîte de vitesse. Il est également connu de prévoir un billage, dit amont, disposé sur le module de commande interne, en général sur la tige de sélection ou le doigt de passage, et permettant d'indexer le mouvement de rotation de ces pièces, correspondant à la sélection d'une position de sélection. De manière connue, ce billage amont fonctionne grâce à une bille coopérant avec un crantage réalisé dans une clé d'interverrouillage, pièce permettant d'éviter que le doigt de passage entraîne simultanément deux fourchettes, ce qui aboutirait à l'engagement simultané de deux rapports.

La présence de ces multiples billages implique cependant des inconvénients
- la complexité et la précision de leur montage entraînent un coût non négligeable (montage de nombreuses pièces mobiles, usinage des surfaces devant coopérer avec les billes...)
- les efforts nécessaires pour entraîner un changement de position, notamment sur les passages dits « en biais », c'est-à-dire nécessitant à la fois un changement de position de sélection et un changement de position de passage, nuisent à l'agrément de manipulation ressenti par le conducteur.

L'invention propose de remédier à ces inconvénients en proposant un dispositif de commande interne de boîte de vitesses facilitant les passages en biais, améliorant ainsi l'agrément ressenti par le conducteur. De plus, le dispositif de commande selon l'invention permet de réduire le nombre de billages nécessaires au fonctionnement de la boîte de vitesses.

Ainsi, l'invention concerne un dispositif de commande interne d'une boîte de vitesses mécanique, comprenant un carter à l'intérieur duquel sont disposés plusieurs éléments d'engagement de rapports, une tige de sélection s'étendant selon un axe longitudinal et mobile en rotation autour de cet axe, un doigt de passage de vitesses porté par la tige de sélection et apte à coulisser le long de celle-ci, une clé d'interverrouillage portée par la tige de sélection et fixe en rotation par rapport à celle-ci, le doigt de passage étant apte à être engagé sélectivement, par rotation de la tige de sélection, dans l'une de plusieurs encoches agencées chacune dans l'un desdits éléments, puis à entraîner l'élément ainsi sélectionné par translation du doigt de passage le long de la tige de sélection, de manière à réaliser l'engagement d'un rapport, tandis que la clé d'interverrouillage est apte à être engagée, par rotation de la tige de sélection, dans les autres encoches que celle de l'élément sélectionné, de manière à immobiliser les autres éléments d'engagement, le dispositif étant tel que la clé d'interverrouillage est mobile en translation le long de l'axe longitudinal, deux butées fixes par rapport au carter limitant de chaque côté la course de la clé à une valeur inférieure au déplacement du doigt de passage lors de l'engagement d'un rapport.

Dans un premier mode de réalisation, la clé d'interverrouillage est mobile en translation par coulissement sur la tige de sélection.

Dans un deuxième mode de réalisation, la clé d'interverrouillage est fixe par rapport à la tige de sélection, l'ensemble de ces deux pièces étant mobile en translation.

Selon l'un ou l'autre des premier et deuxième modes de réalisation, la clé d'interverrouillage coopère avec un billage fixe par rapport au carter afin d'indexer simultanément le positionnement en translation des éléments d'engagement et celui en rotation du doigt de passage de vitesses.

Selon une caractéristique, la clé d'interverrouillage comprend une dent, disposée en regard du billage lorsque la clé est en position de repos de manière que l'extrémité libre de la dent coopère avec le billage pour réaliser l'indexation et le rappel de la clé à la fois dans son mouvement de rotation et dans son mouvement de translation.

Selon une caractéristique, l'extrémité libre de la dent comprend un double profil en « V », formant un profil en « V » à la fois selon une direction tangentielle par rapport à la rotation de la clé et selon la direction de translation de la clé.

Selon une caractéristique, le double profil en « V » est réalisé au moyen de quatre rampes sensiblement planes ou concaves, formant deux dièdres perpendiculaires de même centre.

Selon une caractéristique, le jeu entre la partie de la clé d'interverrouillage engagée dans l'encoche d'un élément d'engagement et cette encoche est réduit au maximum, de manière qu'il autorise le positionnement de la clé dans l'encoche tout en interdisant tout déplacement relatif de celle-ci le long de l'axe longitudinal.

Selon une caractéristique, la partie de la clé d'interverrouillage est pourvue de chanfreins facilitant sont engagement dans les encoches des éléments d'engagements.

L'invention concerne également une boîte de vitesses mécanique à commande manuelle, pourvue d'un dispositif de commande interne tel que défini ci-dessus.

D'autres caractéristiques et avantages de l'invention apparaîtront avec la description faite ci-dessous, cette dernière étant effectuée à titre descriptif et non limitatif en faisant référence aux figures ci-après sur lesquelles :
- la figure 1 représente, selon une vue en perspective, un dispositif de commande interne d'une boîte de vitesses avec une des fourchettes et sa crosse associée ;
- les figures 2a et 2b représentent respectivement deux exemples d'un passage de vitesses « en biais » permettant de comparer différentes configurations du dispositif de commande interne;
- la figure 3 montre, selon une vue en coupe, un détail d'une crosse avec le doigt de passage et la clé d'inter verrouillage ;
- la figure 4 montre une vue en coupe longitudinale du dispositif de commande interne selon l'invention,
- la figure 5 montre un détail de la clé d'interverrouillage selon l'invention.

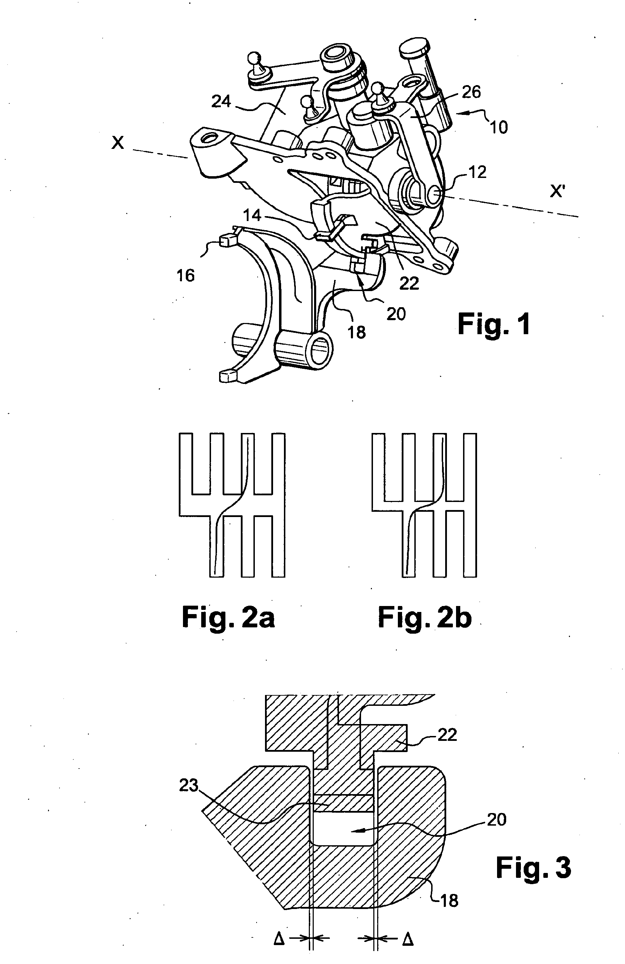

Un dispositif 10 de commande interne d'une boîte de vitesses mécanique à commande manuelle selon l'invention est décrit ci-après en référence aux figures 1, 3 et 4.

Une tige de sélection 12 est montée mobile en rotation autour d'un axe longitudinal XX' par rapport au carter de boîte de vitesses. Un doigt de passage 14 de vitesses est en liaison glissière avec la tige de sélection 12. La tige de sélection 12 est entraînée en rotation par un levier de commande externe 26, lié au levier de commande de vitesses, apte à être manipulé par le conducteur. La tige de sélection 12 pivote entre une pluralité de positions de sélection de vitesses, entraînant le doigt de passage dans son mouvement de rotation. Ainsi, au passage de la tige de sélection 12 d'une position de sélection à une autre correspond la sélection d'une fourchette correspondante via le positionnement du doigt de passage 14 dans une encoche 20 pratiquée dans une crosse 18 solidaire de la fourchette 16. Pour une meilleure lisibilité, une seule fourchette 16 est représentée, mais une boîte de vitesses usuelle compte généralement trois fourchettes, aptes à réaliser l'engagement de six rapports (cinq rapports de marche avant et un rapport de marche arrière). Une fois la fourchette 16 sélectionnée, l'engagement d'un rapport est réalisé par un mouvement de translation selon l'axe longitudinal XX' obtenu par un déplacement du doigt de passage 14 le long la tige de sélection 12.

De manière également connue, chaque fourchette entraîne dans son mouvement un manchon synchroniseur (non représenté). Lorsqu'elle sont dans leur position de repos, l'ensemble des fourchettes sont disposées de manière que les encoches pratiquées sur leurs crosses respectives sont juxtaposées circonférentiellement autour de l'axe XX'. Afin de réduire l'encombrement général des boîtes de vitesses, ainsi que les débattements des pièces mobiles, les crosses des fourchettes sont généralement très proches, entraînant le risque que le doigt de passage soit positionné simultanément dans deux encoches adjacentes, ce qui aboutirait au passage simultané de deux rapports, avec pour conséquences le blocage voire la destruction de la boîte.

Pour empêcher un tel évènement de se produire, il est connu de prévoir une pièce appelée clé d'interverrouillage, solidaire de la tige de sélection, étant donc immobile en translation par rapport au carter de la boîte de vitesses. Lorsque le doigt de passage 14 est dans une position de sélection, la clé d'interverrouillage est engagée dans les autres encoches que celle de la fourchette sélectionnée, immobilisant ainsi les autres fourchettes. De manière connue, le billage « amont » coopère avec une partie de la clé d'interverrouillage, celle-ci étant uniquement mobile en rotation autour de l'axe XX', c'est-à-dire d'une position de sélection à une autre. Une clé d'interverrouillage de l'art antérieur comprend pour cela une partie s'étendant radialement, selon un axe perpendiculaire à l'axe longitudinal, et dont l'extrémité libre comporte deux rampes formant un dièdre concave. Ainsi, la force élastique exercée par le billage sur la clé permet le rappel et le maintien en position neutre (point mort) de la clé d'interverrouillage.

Grâce à l'invention, on peut supprimer le billage propre à chaque fourchette, les manchons synchroniseurs étant alors positionnés, par l'intermédiaire des fourchettes, directement par le billage « amont » du dispositif de commande interne. Pour améliorer, dans cette configuration, la précision de positionnement des manchons, il est avantageux que le jeu Δ de la clé d'interverrouillage 22 à l'intérieur de la crosse 18 (tel que représenté à la figure 3) soit minimal. Cependant, dans l'art antérieur, la réduction de ce jeu pénalise grandement les passages dits « en biais », c'est-à-dire les changements de vitesses impliquant le dégagement d'un rapport, le changement de position de sélection puis l'engagement d'un nouveau rapport, comme c'est le cas par exemple pour un passage de 2^{ème} en 3^{ème}.

Un tel passage est illustré par les figures 2a et 2b. La première figure correspond à un passage en biais dans le cas d'un jeu entre la clé d'interverrouillage et les crosses de fourchettes élevé, la seconde figure correspond au cas ou ce jeu est faible. On voit que, dans ce dernier cas, le chemin à parcourir avec le levier de vitesse est plus « carré » et moins direct que dans le cas de la figure 2a. On obtient alors un agrément pour le passage en biais très dégradé dans le cas de la figure 2b. En effet, comme décrit précédemment, la clé d'interverrouillage, lors d'un changement de position de sélection, vient s'engager dans les deux crosses de fourchettes autres que celle de la fourchette sélectionnée par le doigt de passage. Or, comme la clé d'interverrouillage de la figure 2b est immobile en translation, elle se trouve donc axialement décalée par rapport à une fourchette qui n'est pas en position de repos, et ne peut donc s'engager dans la crosse de celle-ci tant que cette fourchette n'est pas revenue en position de repos. Le jeu entre la clé d'interverrouillage 22 et les crosses de fourchette permet cependant à la clé de s'engager dans la crosse d'une fourchette qui est proche de sa position de repos. Cette tolérance est directement proportionnelle à ce jeu dimensionnel. Ainsi, plus ce jeu est réduit plus la tolérance est faible, et plus le mouvement de passage en biais doit être décomposé, à l'image de la figure 2b.

Selon un but de l'invention, qui consiste notamment à laisser à la clé d'interverrouillage un degré de liberté supplémentaire, on autorise un mouvement de translation de faible amplitude le long de l'axe longitudinal XX'. Cette solution permet ainsi de faciliter les passages en biais tout en réduisant le jeu entre la clé d'interverrouillage et les crosses de fourchettes. En effet, grâce au léger déplacement de la clé d'interverrouillage, on va pouvoir débuter le mouvement de sélection avant que la fourchette dans laquelle le doigt de passage est engagé ne soit totalement revenue à sa position de repos.

De plus, une fois l'ensemble des fourchettes au point mort, on peut entamer le mouvement de passage même si le doigt de passage est engagé dans deux crosses à la fois. En effet, le degré de liberté donné à la clé d'interverrouillage permet que le doigt de passage entraîne simultanément deux fourchettes, mais seulement sur une course limitée, donnée par la course de la clé d'interverrouillage. Le mouvement de la clé d'interverrouillage peut être obtenu selon deux modes de réalisation. Le premier consiste à rendre la clé d'interverrouillage mobile en translation par rapport à la tige de sélection. Le deuxième, qui est le mode de réalisation préféré, consiste à laisser la clé d'interverrouillage solidaire de la tige de sélection, et à rendre mobile en translation le long de l'axe de la tige l'ensemble formé par ces deux pièces. Ainsi, en limitant la course en translation de la tige de sélection, on limite à l'identique celle de la clé d'interverrouillage.

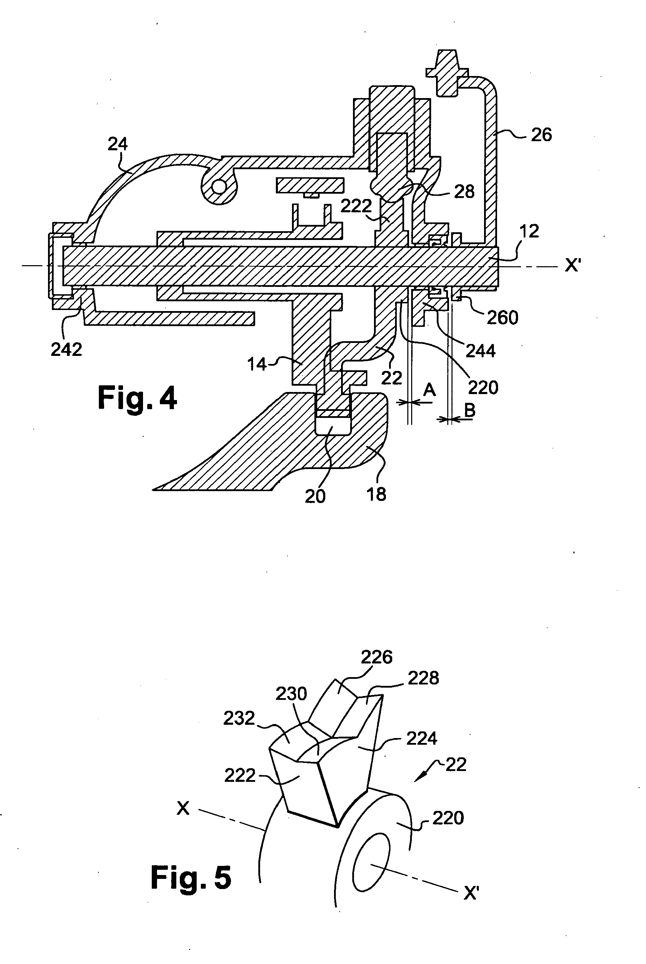

Le mode de réalisation préféré (deuxième mode) est représenté à la figure 4. La tige de sélection 12 est montée en liaison pivot glissant dans le carter de la boîte 24 au moyen d'un premier et deuxième paliers 242 et 244. La tige de sélection 12 porte le doigt de passage 14 et la clé d'interverrouillage 22, cette dernière étant solidaire de la tige 12 via un premier moyeu 220. Une dent 222, ménagée en saillie du premier moyeu 220 est disposée en regard du billage amont 28 et est apte à coopérer avec celui-ci. Ce dernier présente une extrémité de forme sphérique de manière à coopérer avec la forme de l'extrémité 224 de la dent 222. La forme originale de la dent 222 sera détaillée plus bas.

Une extrémité de la tige de sélection 12 est solidaire d'un deuxième moyeu 260 lui-même solidaire du levier de commande externe 26. L'ensemble est configuré de telle manière que le deuxième palier 244 est situé entre le premier moyeu 220 de la clé 22 et le deuxième moyeu 260. Comme le palier 244 est fixe par rapport au carter 24 de la boîte de vitesses, la distance entre ce dernier et le premier moyeu 220 d'une part, et le deuxième moyeu 260 d'autre part, détermine la course disponible en translation pour l'ensemble tige 12/clé 22/levier 26. Bien évidemment, le déplacement dans chaque sens de la clé d'interverrouillage 22 qu'autorisent les jeux A et B est beaucoup plus limité que le déplacement du doigt de passage 14 nécessaire pour l'engagement d'un rapport. Lorsque la tige de sélection 12 est au repos, au point mort, les jeux A et B sont identiques, ce qui permet d'obtenir une course identique dans chaque sens pour la clé 22.

La clé d'interverrouillage 22 conforme à l'invention permet une indexation et un rappel à la fois dans la direction de sélection et dans la direction de passage, grâce à un profil en « double dièdre ». La clé d'interverrouillage 22 est représentée partiellement sur la figure 5, et comprend le premier moyeu 220 permettant le montage de la clé d'interverrouillage 22 sur la tige de sélection 12, la liaison mécanique entre ces deux organes étant de type glissière. A partir de ce premier moyeu 220 s'étend radialement la dent 222, dont l'extrémité libre 224 est apte à coopérer avec le billage 28 (représenté figure 4), qui prend par exemple et de manière connue, la forme d'une bille disposée avec un ressort hélicoïdal dans une cartouche solidaire du carter de la boîte. Le profil de l'extrémité 224 de la dent 222 est en forme de « V » à la fois selon la direction de sélection (i.e. dans un plan perpendiculaire à l'axe XX') et selon la direction de passage (i.e. dans un plan comprenant l'axe XX'). Ce profil est formé par quatre rampes 226, 228, 230, 232 sensiblement planes ou concaves formant deux dièdres perpendiculaires et de même centre.

Afin de mettre en évidence les avantages apportés par la clé d'interverrouillage conforme à l'invention, les figures 2a et 2b, déjà décrites, permettent également de rendre comte des différences de fonctionnement d'une boîte de vitesses pourvue d'une telle clé (figure 2a) avec celui d'une boîte pourvue d'une clé d'interverrouillage fixe comme dans l'art antérieur, mais dont on a supprimé le billage aval et introduit un jeu dimensionnel minimal entre les crosses de fourchettes et la clé d'interverrouillage (figure 2b). En effet, les figures 2a et 2b représentent le chemin à parcourir pour le levier de commande de vitesses, lors d'un passage nécessitant un changement de « couloir » (on appelle conventionnellement couloir les chemins verticaux de la grille de passage de vitesses telle que représentée sur les figures 2a et 2b), comme par exemple le passage du deuxième rapport vers le troisième rapport (cas représenté sur les figures 2a et 2b). On voit de manière évidente, sur la figure 2a, que le passage de vitesse, dit «en biais » est grandement facilité. L'agrément ressenti par le conducteur est donc optimal, puisque le chemin parcouru se rapproche d'une ligne droite, à l'opposé du chemin suivi sur la figure 2b.

Ce fonctionnement est obtenu grâce au degré de liberté en translation dont dispose la clé d'interverrouillage, qui permet, lors du dégagement du deuxième rapport, d'entamer le mouvement de sélection avant que la fourchette de premier/deuxième rapports ne soit revenue au point mort si la partie 23 de la clé 22 devant être engagée dans l'encoche 20 de la crosse 18, est pourvue de chanfreins adaptés. Lorsque cette fourchette est revenue à sa position de repos, on peut entamer le mouvement de passage du troisième rapport, même si le doigt de passage est engagé dans deux crosses en même temps, grâce au degré de liberté en translation dont dispose la clé d'interverrouillage 22. En effet, la course de la clé 22 étant très limitée par rapport à la course du doigt de passage, la fourchette de premier/second rapports ne pourra être emmenée jusqu'à la position d'engagement du premier rapport. Une fois le troisième rapport engagé grâce à la fourchette de troisième/quatrième rapport, la clé d'interverrouillage est ramenée à sa position de repos grâce à l'action de rappel et d'indexation du billage 28.

Les avantages d'une clé d'interverrouillage selon l'invention sont nombreux. Tout d'abord, on a supprimé le billage « aval » ou « billage fourchettes », ce qui représente des pièces en moins par rapport à une boîte de vitesse traditionnelle, et donc une économie. De plus, on se dispense également de l'usinage précis de profil de billage sur lesdites fourchettes, ceux-ci étant devenus inutiles. De manière similaire, le carter de la boîte est simplifé puisqu'une partie des bossages devant être prévu et usiné pour recevoir les billages sont supprimés. Enfin, la clé d'interverrouillage selon l'invention est obtenue à partir d'une clé conventionnelle par une adaptation minime. En effet, la seule différence réside dans le profil destiné à coopérer avec le billage amont : d'un profil en V simple, on passe à un profil en V double.

## Revendications

1. Dispositif (10) de commande interne d'une boîte de vitesses mécanique, comprenant un carter (24) à l'intérieur duquel sont disposés plusieurs éléments d'engagement (16) de rapports, une tige de sélection (12) s'étendant selon un axe longitudinal (XX') et mobile en rotation autour de cet axe, un doigt (14) de passage de vitesses porté par la tige de sélection (12) et apte à coulisser le long de celle-ci, une clé d'interverrouillage (22) portée par la tige de sélection (12) et fixe en rotation par rapport à celle-ci, le doigt de passage (14) étant apte à être engagé sélectivement, par rotation de la tige de sélection (12), dans l'une de plusieurs encoches (20) agencées chacune dans l'un desdits éléments (16), puis à entraîner l'élément ainsi sélectionné par translation du doigt de passage (14) le long de la tige de sélection (12), de manière à réaliser l'engagement d'un rapport, tandis que la clé d'interverrouillage (22) est apte à être engagée, par rotation de la tige de sélection (12), dans les autres encoches (20) que celle de l'élément sélectionné, de manière à immobiliser les autres éléments d'engagement (16), le dispositif étant **caractérisé en ce que** la clé d'interverrouillage (22) est mobile en translation le long de l'axe longitudinal (XX'), deux butées fixes par rapport au carter (24) limitant de chaque côté la course de la clé (22) à une valeur inférieure au déplacement du doigt de passage (14) lors de l'engagement d'un rapport.

2. Dispositif selon la revendication 1, dans lequel la clé d'interverrouillage (22) est mobile en translation par coulissement sur la tige de sélection (12).

3. Dispositif selon la revendication 1, dans lequel la clé d'interverrouillage (22) est fixe par rapport à la tige de sélection (12), l'ensemble de ces deux pièces étant mobile en translation.

4. Dispositif selon l'une des revendications 1 à 3, dans lequel la clé d'interverrouillage (22) coopère avec un billage (28) fixe par rapport au carter (24) afin d'indexer simultanément le positionnement en translation des éléments d'engagement (16) et celui en rotation du doigt (14) de passage de vitesses.

5. Dispositif selon la revendication 4, dans lequel la clé d'interverrouillage (22) comprend une dent (222), disposée en regard du billage (28) lorsque la clé (22) est en position de repos de manière que l'extrémité libre (224) de la dent (222) coopère avec le billage (28) pour réaliser l'indexation et le rappel de la clé (22) à la fois dans son mouvement de rotation et dans son mouvement de translation.

6. Dispositif selon la revendication 5, dans lequel l'extrémité libre (224) de la dent (222) comprend un double profil en « V », formant un profil en « V » à la fois selon une direction tangentielle par rapport à la rotation de la clé (22) et selon la direction de translation de la clé (22).

7. Dispositif selon la revendication 6, dans lequel le double profil en « V » est réalisé au moyen de quatre rampes (226, 228, 230, 232) sensiblement planes ou concaves, formant deux dièdres perpendiculaires de même centre.

8. Dispositif selon l'une des revendications 1 à 7, dans lequel le jeu (Δ) entre la partie (23) de la clé d'interverrouillage (22) engagée dans l'encoche (20) d'un élément d'engagement (16) et cette encoche (20) est réduit au maximum, de manière qu'il autorise le positionnement de la clé (22) dans l'encoche (20) tout en interdisant tout déplacement relatif de celle-ci le long de l'axe longitudinal (XX').

9. Dispositif selon la revendication 8, dans lequel la partie (23) de la clé d'interverrouillage (22) est pourvue de chanfreins facilitant sont engagement dans les encoches (20) des éléments d'engagements (16).

10. Boîte de vitesses mécanique à commande manuelle, pourvue d'un dispositif (10) de commande interne selon l'une des revendications 1 à 9.

## Claims

1. Device (10) for the internal control of a mechanical gearbox, comprising a casing (24) in which there are positioned various gear ratio engagement elements (16), a selection rod (12) running a longitudinal axis (XX') and able to rotate about this axis, a shift finger (14) carried by the selection rod (12) and able to slide along the latter, an interlocking key (22) carried by the selection rod (12) and unable to rotate with respect to the latter, the shift finger (14) being able to be engaged selectively, through rotation of the selection rod (12), in one of many notches (20) each arranged in one of the said elements (16) and then to drive the element thus selected as a result of a translational movement of the shift finger (14) along the selection rod (12), in such a way as to engage a gear ratio, while the interlock key (22) is able to be engaged, by a rotation of the selection rod (12), in the notches (20) other than that of the selected element so as to immobilize the other engagement elements (16), the device being **characterized in that** the interlocking key (22) is capable of translational movement along the longitudinal axis (XX'), two end stops that are fixed with respect to the casing (22) limiting, on each side, the travel of the key (22) to a value shorter than the movement of the shift finger (14) when engaging a gear ratio.

2. Device according to Claim 1, in which the interlocking key (22) is capable of translational movement in sliding along the selection rod (12).

3. Device according to Claim 1, in which the interlocking key (22) is unable to move with respect to the selection rod (12), these two components effecting a joint translational movement.

4. Device according to one of Claims 1 to 3, in which the interlocking key (22), collaborates with a ball assembly (28) that is fixed with respect to the casing (24) in order simultaneously to index the translational positioning of the engagement elements (16) and the rotational positioning of the shift finger (14).

5. Device according to Claim 4, in which the interlocking key (22) comprises a tooth (222) positioned facing the ball assembly (28) when the key (22) is in the rest position so that the free end (224) of the tooth (222) collaborates with the ball assembly (28) to index and return the key (22) both in terms of its rotational movement and in terms of its translational movement.

6. Device according to Claim 5, in which the free end (224) of the tooth (222) has a double "V" profile forming a "V" profile both in a direction tangential to the rotation of the key (22) and in the direction of translational movement of the key (22).

7. Device according to Claim 6, in which the double "V" profile is created using four substantially planar or concave ramps (226, 228, 230, 232) forming two perpendicular dihedra with the same centre.

8. Device according to one of Claims 1 to 7, in which the clearance (Δ) between that part (23) of the interlocking key (22) that is engaged in the notch (20) of an engagement element (16) and that notch (20) is reduced as far as possible so that it allows the key (22) to be positioned in the notch (20) while at the same time preventing any relative movement thereof along the longitudinal axis (XX').

9. Device according to Claim 8, in which that part (23) of the interlocking key (22) is provided with chamfers making it easier to engage in the notches (20) of the engagement elements (16).

10. Mechanical manual gearbox provided with an internal control device (10) according to one of Claims 1 to 9.

## Patentansprüche

1. Vorrichtung (10) zur internen Steuerung eines mechanischen Getriebes, mit einem Gehäuse (24), in dessen Innerem mehrere Elemente (16) zum Einlegen von Gängen angeordnet sind, mit einer Wählstange (12), die sich gemäß einer Längsachse (XX') erstreckt und um diese Achse drehbeweglich ist, mit einem Gangschaltfinger (14), der von der Wählstange (12) getragen wird und entlang dieser gleiten kann, mit einer Schaltverriegelung (22), die von der Wählstange (12) getragen wird und bezüglich dieser in Drehung fest ist, wobei der Gangschaltfinger (14) selektiv durch Drehen der Wählstange (12) in eine von mehreren Kerben (20) eingelegt werden kann, die je in einem der Elemente (16) angeordnet sind, dann das so gewählte Element durch Translationsbewegung des Gangschaltfingers (14) entlang der Wählstange (12) antreiben kann, um das Einlegen eines Gangs durchzuführen, während die Schaltverriegelung (22) durch Drehen der Wählstange (12) in die anderen Kerben (20) als diejenige des gewählten Elements eingelegt werden kann, um die anderen Einlegelemente (16) zu blockieren, wobei die Vorrichtung **dadurch gekennzeichnet ist, dass** die Schaltverriegelung (22) entlang der Längsachse (XX') translationsbeweglich ist, wobei zwei bezüglich des Gehäuses (24) feste Anschläge auf jeder Seite den Hub der Schaltverriegelung (22) auf einen geringeren Wert als die Verschiebung des Gangschaltfingers (14) beim Einlegen eines Gangs begrenzen.

2. Vorrichtung nach Anspruch 1, bei der die Schaltverriegelung (22) durch Gleiten auf der Wählstange (12) translationsbeweglich ist.

3. Vorrichtung nach Anspruch 1, bei der die Schaltverriegelung (22) bezüglich der Wählstange (12) fest ist, wobei die Einheit dieser zwei Bauteile translationsbeweglich ist.

4. Vorrichtung nach einem der Ansprüche 1 bis 3, bei der die Schaltverriegelung (22) mit einer Kugellagerung (28) zusammenarbeitet, die bezüglich des Gehäuses (24) fest ist, um gleichzeitig die Translationspositionierung der Einlegelemente (16) und die Drehpositionierung des Gangschaltfingers (14) zu indexieren.

5. Vorrichtung nach Anspruch 4, bei der die Schaltverriegelung (22) einen Zahn (222) enthält, der gegenüber der Kugellagerung (28) angeordnet ist, wenn die Schaltverriegelung (22) in der Ruhestellung ist, damit das freie Ende (224) des Zahns (222) mit der Kugellagerung (28) zusammenwirkt, um die Indexierung und die Rückstellung der Schaltverriegelung (22) sowohl bei ihrer Drehbewegung als auch bei ihrer Translationsbewegung durchzuführen.

6. Vorrichtung nach Anspruch 5, bei der das freie Ende (224) des Zahns (222) ein doppeltes V-förmiges Profil enthält, das ein V-förmiges Profil sowohl in einer tangentialen Richtung bezüglich der Drehung der Schaltverriegelung (22) als auch in der Translationsrichtung der Schaltverriegelung (22) formt.

7. Vorrichtung nach Anspruch 6, bei der das doppelte V-Profil mit Hilfe von vier im Wesentlichen ebenen oder konkaven Rampen (226, 228, 230, 232) hergestellt wird, die zwei lotrechte Dieder mit gleicher Mitte formen.

8. Vorrichtung nach einem der Ansprüche 1 bis 7, bei der das Spiel (Δ) zwischen dem Bereich (23) der Schaltverriegelung (22), der in die Kerbe (20) eines Einlegelements (16) eingelegt ist, und dieser Kerbe (20) maximal reduziert ist, so dass es die Positionierung der Schaltverriegelung (22) in der Kerbe (20) erlaubt und gleichzeitig jede relative Verschiebung dieser Schaltverriegelung entlang der Längsachse (XX') verhindert.

9. Vorrichtung nach Anspruch 8, bei der der Bereich (23) der Schaltverriegelung (22) mit Abschrägungen versehen ist, die sein Einlegen in die Kerben (20) der Einlegelemente (16) erleichtern.

10. Mechanisches Getriebe mit manueller Steuerung, das mit einer internen Steuervorrichtung (10) nach einem der Ansprüche 1 bis 9 versehen ist.
